# EUROPÄISCHE PATENTANMELDUNG

(11) **EP 3 260 430 A1**
(43) Veröffentlichungstag der Anmeldung: **27.12.2017**
(21) Anmeldenummer: 17177094.4
(22) Anmeldetag: 21.06.2017
(51) Int. Cl.: C03B 19/08, C03C 11/00, C04B 38/00

(54) **VERFAHREN ZUR HERSTELLUNG EINES FESTEN SCHAUMES UND DAMIT HERGESTELLTER SCHAUM**

(30) Priorität: 21.06.2016 AT 3052016
(71) Anmelder: Kurbos, Rainer, AT-8042 Graz (AT)
(72) Erfinder: Kurbos, Rainer, AT-8042 Graz (AT)
(74) Vertreter: Wirnsberger & Lerchbaum Patentanwälte OG

(57) **Zusammenfassung**

Die Erfindung betrifft ein Verfahren zur Herstellung eines Schaumes (1), insbesondere eines oxidischen Schaumes (1), aus einem festen Material (2), wobei das feste Material aufgeschmolzen und aus einem zugesetzten Treibmittel (3) durch eine Redoxreaktion Gase freigesetzt werden, um im aufgeschmolzenen Material (4) Poren (6) zu bilden, wonach das aufgeschmolzene und geschäumte Material (5) unter Verfestigung abgekühlt wird.

Des Weiteren betrifft die Erfindung einen festen Schaum (1) aus einem oxidischen Material, wobei Porenwände zumindest bereichsweise mit einer Schicht eines weiteren Materials belegt sind, wobei der Schaum (1) zumindest überwiegend geschlossenzellige Poren (6) aufweist und ein Anteil an fester Masse im Schaum (1) weniger als 5 Vol.-% beträgt.

## Beschreibung

Die Erfindung betrifft ein Verfahren zur Herstellung eines Schaumes, insbesondere eines oxydischen Schaumes, aus einem festen Material.

Des Weiteren betrifft die Erfindung einen entsprechend hergestellten festen Schaum.

Aus dem Stand der Technik sind verschiedene Verfahren bekannt geworden, feste Schäume zu erstellen. So ist aus der DE 30 36 516 A1 bekannt geworden, ein aufgeschäumtes Glas dadurch herzustellen, dass bei der Herstellung einer Glasschmelze sogleich brennbare Materialien beigemengt werden, die bei Temperaturerhöhung und Verbrennung dazu führen, dass Blasen entstehen. Um die Blasen in der Schmelze zu halten, ist ein Überdruck erforderlich. Die entsprechend unter Überdruck gehaltene Schmelze, die durch Stromeintrag erwärmt wird, wird anschließend über ein Steigrohr aus der eigentlichen Reaktionszone austreten gelassen, wobei sich die Blasen der unter Druck stehenden und mit den Blasen beaufschlagten Schmelze unter gleichzeitiger Abkühlung und damit Verfestigung der Schmelze ausdehnen können. Dadurch soll ein schaumartiges Glas erhalten werden. Eine Erwärmung erfolgt dabei durch Stromeintrag mit Elektroden, wobei auch Grundmaterial bzw. Glas bei geeigneter Zusammensetzung so eingesetzt werden kann, dass die Gase bereits selbstständig, somit ohne weitere Hilfsstoffe im Glas entstehen.

Aus der WO 2010/022423 A1 des Anmelders ist es bekannt, dass ein schaumfähiges Material dadurch erstellt werden kann, dass ein Grundmaterial im schmelzfähigen Zustand mit einem zur Abspaltung von Gasen fähigem Hilfsstoff auf Temperatur gebracht wird, sodass eine Schmelze mit dem Hilfsstoff vorliegt, wobei der Hilfsstoff durch Beaufschlagung mit Energiewellen zersetzt wird, sodass sich der Hilfsstoff zersetzt, wobei durch die Zersetzung des Hilfsstoffes eine Bildung von Blasen und damit Poren im finalen Schaum hervorgerufen wird.

Den vorstehenden erläuterten Verfahren des Standes der Technik haften die Nachteile an, dass die Verfahren aufwendig und schwer kontrollierbar sind und der erstellte feste Schaum starke Inhomogenitäten aufweist.

Die Erfindung setzt sich zum Ziel, ein Verfahren der eingangs genannten Art anzugeben, welches die vorstehend erwähnten Nachteile beseitigen kann.

Des Weiteren ist es ein Ziel der Erfindung, einen entsprechend hergestellten Schaum anzugeben, der sich durch verbesserte Eigenschaften gegenüber dem Stand der Technik auszeichnet.

Die verfahrensmäßige Aufgabe wird gelöst, wenn bei einem Verfahren der eingangs genannten Art das feste Material aufgeschmolzen und aus einem zugesetzten Treibmittel durch eine Redoxreaktion, z. B. durch Elektrolyse, Gase freigesetzt werden, um im aufgeschmolzenen Material Poren zu bilden, wonach das aufgeschmolzene und geschäumte Material unter Verfestigung abgekühlt wird.

Ein mit der Erfindung erzielter Vorteil ist insbesondere darin zu sehen, dass zunächst das Material aufgeschmolzen und erst dann in diesem durch eine Redoxreaktion mit dem Treibmittel Blasen gebildet werden, die schließlich zu Poren im finalen Produkt bzw. dem Festkörper, also den Schaum, führen. Durch diese gewählte Abfolge von Erstellung einer Schmelze und anschließender Blasen- bzw. Porengenerierung ergibt sich eine wesentlich bessere und gezieltere Handhabbarkeit des gesamten Prozesses mit einfachen Verfahrensmitteln. Bei einer entsprechenden Prozessführung können aufgrund der Trennung der Erschmelzung einerseits und der Blasen- bzw. Porengenerierung andererseits Eigenschaften der Poren bzw. Blasen, beispielsweise Porengröße, Wandstärke von die Poren umgebenen festen Material sowie deren Verteilungen mit höherer Qualität kontrolliert werden, da die Redoxreaktion zur Umwandlung des Treibmittels auch bei den insbesondere für oxidische Schmelzen höheren Temperaturen sehr gut kontrollierbar ist.

Das Prinzip der Erfindung besteht darin, dass das schmelzflüssige Gemenge einer Redoxreaktion ausgesetzt wird, das heißt, dass durch Reduktion Treibmitteldampf, bevorzugt Oxid- oder Sulfat-/Sulfitdampf, besonders bevorzugt Metalldampf, entsteht. Dieser Dampf bläht Blasen bzw. Poren bevorzugt im Mikrometerbereich auf, die Kugel- oder Polyederschaum bilden. Im Zuge des Erkaltens der Schmelze kondensiert der Dampf dann an Poreninnenwänden, sodass evakuierte und ganz oder teilweise mit dem Metall oder den Metallen verspiegelte Poren zurückbleiben. Wichtig ist dabei die glaschemische Abstimmung des Viskositätsverlaufes des Glases mit der Zunahme der Viskosität mit dem Dampfdruckabfall des Metalldampfes während des Erkaltens. Der Dampf muss noch so lange einen stützenden Druck gegen die Oberflächenspannung aufbauen können, wie die Viskosität des Glases noch zu gering ist, um ein Zusammenziehen der Poren zu verhindern.

Im Bereich der Schmelze von reinen Verbindungen, wie beispielsweise Zirconaten (besonders bevorzugt Bariumzirconat) tritt das Erhärten im Zuge der Abkühlung bei Unterschreiten des Schmelzpunktes schlagartig auf. Auch die Viskositätskurve des Glases kann man sich hier angenähert denken. Im Falle der hochschmelzenden Materialien (Oxide) muss der Druck des Treib- und dann Stützmitteldampfes so lange aufrechterhalten werden, bis das Matrixmaterial schaumförmig ausreichend erhärtet ist. Ein vollständiges Auskühlen ist für diesen Effekt hingegen nicht nötig.

Das heißt, dass das jeweilige Treibmittel, beispielsweise Oxid, Sulfat/Sulfit oder Metalldampf, den jeweiligen Materialeigenschaften des Oxides oder Glases anzupassen ist. Zwischen dem Treibmitteldampf und der Oberflächenspannung der Schmelze sollte jederzeit ein solches Verhältnis herrschen, dass die Pore nicht zusammenfällt, außer ein partielles Verdichten des erstellten Materials ist in Teilbereichen erwünscht, z. B zur Erstellung eines Dichtegradienten im Material. Das Treibmittel darf erst dann vollständig kondensieren, wenn die Viskosität der Schmelze hoch genug ist, um das weitere Zusammenziehen der Pore endgültig zu verhindern.

Hilfreich ist in diesem Zusammenhang, dass bei Oxiden das Erstarren am Schmelzpunkt schlagartig erfolgt, während es bei Glasschmelzen entlang der Vogel-Fulcher-Tammann-Kurve mit stark progressiver Viskositätszunahme über mehrere Potenzen innerhalb kurzer Temperaturbereiche erfolgt.

Die Abnahme des Dampfdruckes folgt ebenfalls einem stark nicht linearen Gesetz, sodass es in der Regel gelingt, die Viskositätszunahme auf die Dampfdruckabnahme rechnerisch und praktisch optimal abzustimmen.

So ist beispielsweise bei üblichen Glaszusammensetzungen ein Poreninnenüberdruck von ungefähr 12 bar erforderlich, um Porendurchmesser von kleiner 1 µm zu realisieren, welche sich als besonders vorteilhaft für die Unterschreitung der freien Weglänge gezeigt haben, wenn man einen Innendruck im erkalteten Zustand von 1 mbar bis 10 mbar anstrebt.

Zinkdampf beispielsweise weist einen Dampfdruck von rund 10 bar im Bereich von etwa 1.225 °C bis 1.200°°C auf, das heißt, dass Glas, das mit Zinkdampf aufgebläht werden soll, in diesem Temperaturbereich eine Viskosität aufweisen muss, die hoch genug ist, um den Polyederschaum zu bilden und eine kurze Zeit, so lange nämlich, bis das Glas so weit abgekühlt ist, dass eine ausreichende Stützwirkung des Schaumgerüstes einsetzt, aufrechtzuerhalten.

Besonders bevorzugt ist es, dass aus dem Treibmittel mit Stromeintrag, insbesondere intermittierenden Stromeintrag, in die Schmelze des aufgeschlossenen Materials Gase freigesetzt werden. Dabei kann vorgesehen sein, dass eine Elektrolyse des Treibmittels mit Gleichstrom und/oder gepulsten Wechselstrom und/oder Wechselstrom mit Gleichstromanteil durchgeführt wird.

Wenn eine elektrische Leitfähigkeit in der Elektrolysezone nicht mehr ausreichen sollte, elektrolytisch eine ausreichende Menge an Dampftreibmittel zu erzeugen, ist es erforderlich, so hohe Spannungen anzulegen, dass die elektrolytische Zersetzung des Treibmittels dennoch funktioniert. Erfahrungsgemäß führt dies allerdings früher oder später zur Ausbildung von Lichtbögen. Um diese Lichtbögen zu vermeiden, haben sich eine pulsierende Gleichspannung und/oder ein rechtzeitiges Abschalten bei rapider Stromzunahme, wie diese für den entstehenden Lichtbogen charakteristisch ist, bewährt.

Zur elektrolytischen Glaszerlegung ist ein Gleichstrom zumindest als Gleichanteil im Heizstrom günstig. Wenn beispielsweise bei gut isolierenden Zirconaten eine hohe Zersetzungsspannung erforderlich wird, die über der Spannung liegt, bei der sich bei stabilem Anliegen derselben ein Lichtbogen bildet, muss der Gleichstrom gepulst werden.

Es zeigt sich erfahrungsgemäß, dass mit entsprechend hohen Spannungen von beispielsweise 1,5 kV bis 2 kV und entsprechend kurzen Impulsen Treibmittelkomponenten in jeder keramischen Schmelze erzeugt werden können. Die rechtzeitige Abschaltung des entstehenden Lichtbogens erfordert dann allerdings den Einsatz von modernen Halbleiterschaltungen (z.B. GaN-Halbleiter, 80 ns/V Anstiegszeiten).

Insbesondere kann im Rahmen der Erfindung auch eine anorganische Verbindung als Treibmittel zugesetzt werden, insbesondere ein Metalloxid. Ist dies der Fall, ergibt sich ein weiterer Aspekt der Erfindung darin, dass das schmelzflüssige Gemenge einer Spannung ausgesetzt wird, welche das Treibmittel aktiviert, die Schmelze an sich bzw. das bereitgestellte feste Material nicht verändert. Dies bedeutet, dass durch Reduktion Treibmitteldampf, bevorzugt Oxid- oder Sulfat-/Sulfitdampf, besonders bevorzugt Metalldampf, entsteht. Dieser Dampf bläht Blasen bevorzugt im Mikrometerbereich in der Schmelze auf, welche Kugel- oder, bevorzugt, Polyederschaum bilden. Im Zuge eines Abkühlens der Schmelze kondensiert der Dampf dann, sodass evakuierte und gänzliche oder teilweise verspiegelte Poren zurückbleiben. Wird beispielsweise ein Metalloxid eingesetzt, erfolgt durch die Elektrolyse eine Reduktion der Metallionen, sodass Metalldampf in den Blasen bzw. Poren anwesend ist, welcher zur Aufblähung führt. Der (relativ kleine) Sauerstoff kann noch vor der Verfestigung des Schaumes entweichen. Ist dies der Fall, schlägt sich bei der späteren Verfestigung des Schaumes das dann kondensierende Metall an den Porenwänden ab, sodass innenseitig zumindest bereichsweise verspiegelte Oberflächen, und zwar durch den jeweiligen Metallspiegel, erreicht werden.

Bei der entsprechenden Verfahrensführung kann es günstig sein, wenn eine Abstimmung eines Viskositätsverlaufes der Schmelze des Glases oder eines anderen Oxides mit der Zunahme der Viskosität mit dem Dampfdruckabfall des Metalldampfes (oder eines anderen Treibmittels) während des Erkaltens korreliert wird. Der Dampf sollte noch so lange einen stützenden Druck gegen die Oberflächenspannung der Schmelze aufbauen können, wie eine Viskosität des Glases (oder eines anderen zu schmelzenden Grundmaterials) noch zu gering ist, um ein Zusammenziehen der Poren zu verhindern.

Während bei Verfahren gemäß dem Stand der Technik zwingend eine Druckadjustierung in Bezug auf einen auf der Schmelze anliegenden Druck erfolgen muss, um Blasen bzw. Poren in der Schmelze zu halten, kann das erfindungsgemäße Verfahren zur Erstellung der Poren unter Luftdruck erfolgen. Dies ist ein wesentlicher Vorteil, weil sich dadurch auch ein apparativer Aufwand deutlich verringert. Dennoch, sofern wünschenswert, kann selbstverständlich ein Unter- oder Überdruck angelegt werden, um Eigenschaften des finalen Produktes zu optimieren.

Mit einem erfindungsgemäßen Verfahren ist es möglich, Poren im finalen Produkt bzw. zuvor Blasen in der Schmelze mit weitgehend beliebigen Durchmessern zu erstellen. Bevorzugt ist es, dass die Poren mit einem durchschnittlichen Durchmesser von maximal 20 µm, vorzugsweise maximal 10 µm, insbesondere maximal 1 µm, erstellt werden. Je kleiner die Poren, desto besser sind die Eigenschaften des finalen Produktes bzw. Schaumes für diverse Anwendungen, beispielsweise Anwendungen des Schaumes als Baustoff oder Werkstoff, beispielsweise zur Wärmedämmung und/oder Schallabsorption.

Das Verfahren kann, muss aber nicht kontinuierlich geführt werden. Eine kontinuierliche Verfahrensführung ist insofern zweckmäßig, als in vergleichsweise kurzer Zeit relativ große Mengen des gewünschten Produktes erzeugt werden können. Diesbezüglich hängt es davon ab, welcher Einsatzzweck für das finale Produkt intendiert ist. Soll das Produkt zwar vergleichsweise hochwertig sein, aber in Massenprodukten zur Anwendung kommen, beispielsweise als Isolationsmaterial im Baugewerbe, empfiehlt sich klarerweise eine kontinuierliche Produktion, die in Bezug auf einen Durchsatz wesentlich kostengünstiger ist, als eine Batch-Produktion. Werden hingegen Schäume für eine Hightech-Anwendung gefordert, beispielsweise Einzelteile oder Kleinserien für architektonische Zwecke, kann auch eine Batch-Produktion aus wirtschaftlicher Sicht ökonomisch zweckmäßig sein.

Das weitere Ziel der Erfindung wird erreicht, wenn bei einem festen Schaum der eingangs genannten Art der Schaum zumindest überwiegend geschlossenzellige Poren aufweist und ein Anteil an fester Masse im Schaum weniger als 5 Volumsprozent (Vol.-%) beträgt.

Die mit einem erfindungsgemäßen Schaum erzielten Vorteile sind insbesondere darin zu sehen, dass der Schaum leicht herstellbar, stabil und äußerst leichtgewichtig ist. Der Schaum kann daher in vielfältiger Weise eingesetzt werden.

Das weitere Material ist bevorzugt ein Metall. Das Metall oder gegebenenfalls ein anderes weiteres Material kann mit einer Schichtdicke von weniger als 1 µm, bevorzugt weniger als 500 nm, insbesondere weniger als 250 nm, an den Porenwänden anliegen. Eine entsprechende Schichtbildung zur zumindest bereichsweisen innenseitigen Auskleidung der Poren bzw. Beschichtung der Porenwände ergibt sich durch die Verfahrensführung. Wird beispielsweise ein Metalloxid in der Schmelze, beispielsweise einer Glasschmelze oder einer Schmelze eines Zirconates, elektrolytisch zersetzt, so entsteht einerseits Sauerstoff, der relativ leicht und rasch aus der Schmelze entweicht. Auf der anderen Seite entsteht auch Metalldampf, welcher in der Schmelze verbleibt und dafür sorgt, dass sich in der Schmelze Blasen bilden, die später Poren im festen Schaum darstellen. Ein Anteil an Metalloxid bzw. Treibmittel wird dabei so gewählt, dass ein bestimmtes Volumen an Poren, bezogen auf ein Gesamtvolumen des festen Schaumes, entsteht. Eine Größenverteilung der Poren im festen Schaum kann über die Generierung des Metalldampfes durch die Elektrolyse einerseits sowie die Viskosität der Schmelze andererseits gesteuert werden. Grundsätzlich ist Viskosität der Schmelze so einzustellen, dass diese hoch genug ist, um bei der Generierung des Metalldampfes und der Bildung von Blasen ein Zusammenfallen, insbesondere auch während der Verfestigung der aufgeschäumten Schmelze, zu verhindern. Dies lässt sich jedoch exakt durch eine Temperaturführung steuern. Dabei können für eine Feinjustage auch zusätzliche Energieeinträger vorgesehen werden, die vor allem auch in einzelnen Bereichen eine exakte Temperaturführung erlauben. Hierfür hat sich beispielsweise ein zusätzlicher Energieeintrag wellenförmiger Energie, beispielsweise Hochfrequenzwellen oder auch Mikrowellen, bewährt.

Wird ein fester Schaum nach einem erfindungsgemäßen Verfahren hergestellt, stehen die Poren im festen Schaum in der Regel unter einem Unterdruck. Da während der Verfestigung der aufgeschäumten Schmelze das Treibmittel kondensiert und sich an den Porenwänden niederschlägt, die Poren jedoch geschlossenzellig ausgebildet sind, resultiert ein Unterdruck. Im Idealfall liegt ein fester Schaum mit geschlossenzelligen Poren vor, wobei zumindest ein Teil, vorzugsweise die überwiegende Anzahl der Poren, weitgehend gasfrei ist, sodass von quasi evakuierten Poren gesprochen werden kann. Ein derartiges Material ist selbstverständlich bestens für Isolationszwecke geeignet, beispielsweise zur Wärmedämmung, aber auch an anderen Anwendungen zur Isolation, beispielsweise zur Schalldämmung.

Die Poren können mit einem durchschnittlichen Durchmesser von maximal 20 µm, vorzugsweise maximal 10 µm, insbesondere maximal 1 µm, vorliegen. Ein durchschnittlicher Porendurchmesser ist in weiten Bereichen variierbar. In den angegebenen Größenbereichen können die gewünschten Isolationswirkungen in ausreichend guter Qualität erreicht werden. Im Übrigen lassen sich entsprechende Porendurchmesser über die Viskosität der Schmelze relativ einfach ausbilden.

Die Porenwände der Poren im festen Schaum sind in der Regel im Querschnitt durchschnittlich dünner als 500 nm, bevorzugt dünner als 250 nm, insbesondere dünner als 150 nm, ausgebildet. Je dünner die Porenwände, umso weniger Material ist bezogen auf das Volumen erforderlich, um den festen Schaum zu bilden. Sofern es nur auf ein leichtes Gewicht ankommt, ist eine besonders dünne Ausbildung der Porenwände bevorzugt. Sofern allerdings im Einsatz eine gewisse kräftemäßige Belastung des Schaumes gegeben ist, kann es auch zweckmäßig sein, die Porenwände dicker bzw. stärker auszubilden, sodass höhere Lasten aufgenommen werden können.

Insbesondere in Bezug auf Anwendungen zur Wärmedämmung bzw. als Baumaterial ist es bevorzugt, wenn ein Anteil an fester Masse im Schaum weniger als 1 Vol.-% beträgt.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
- Fig. 1: eine schematische Darstellung eines Verfahrens;
- Fig. 2: eine schematische Darstellung eines Ausschnittes aus einem festen Schaum.

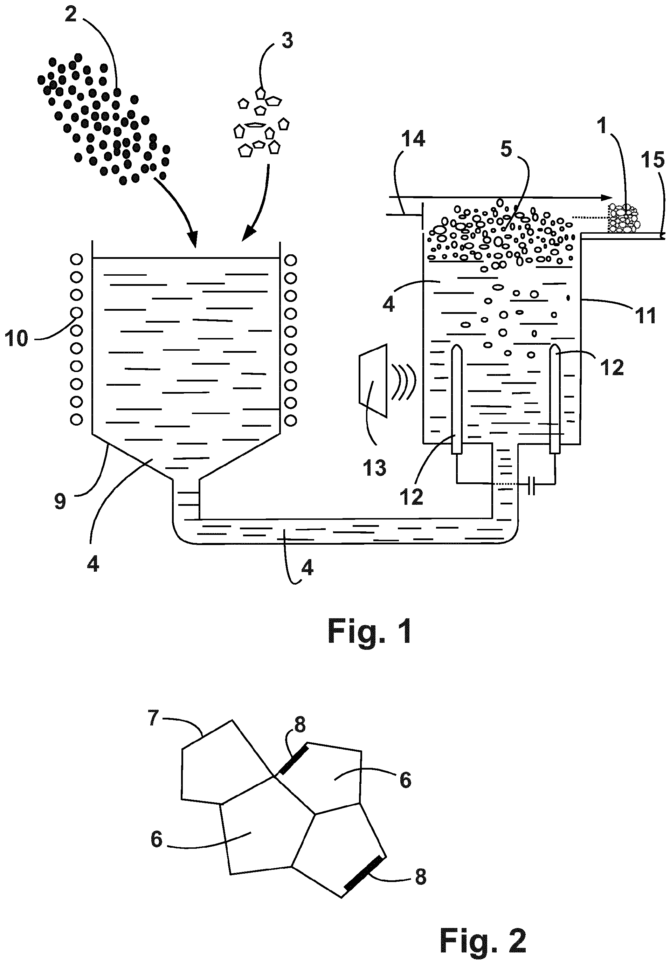

In Fig. 1 ist ein Verfahren zur Herstellung eines Schaumes 1, insbesondere eines oxidischen Schaumes 1 stark schematisiert dargestellt. Zur Durchführung des Verfahrens wird eine Vorrichtung eingesetzt, welche einen Schmelztiegel 9 umfasst, der von einer Heizeinrichtung 10 umgeben ist. Der Schmelztiegel 9 ist über ein Rohr mit einem Schäumkompartiment 11 verbunden, in welches seitlich Elektroden 12 einragen. Die Elektroden 12 sind mit einem Gleichstrom oder auch einem gepulsten Wechselstrom beaufschlagbar. Möglich ist es auch, die Elektroden 12 mit einem Wechselstrom mit Gleichstromanteilen zu beaufschlagen. Des Weiteren ist ein Wellengenerator 13 vorgesehen, mit welchem in das Schäumkompartiment 11 Energie in Form von Wellen, beispielsweise Hochfrequenzwellen, eingebracht werden können. Des Weiteren ist am Schäumkompartiment 11 kopfseitig ein Schieber 14 vorgesehen, welcher horizontal zumindest bis zu einem Förderband 15 bewegbar ist.

Zur Herstellung eines festen Schaumes 1 wird festes Material 2 sowie ein Treibmittel 3 in den Schmelzetiegel 9 eingefüllt und in diesem durch Beaufschlagung mit der Heizeinrichtung 10 gemeinsam erschmolzen. Bei dem festen Material 2 kann es sich beispielsweise um Material aus einem silicatischen Glas, aber auch anderen oxidischen Materialien wie Zirconate handeln, insbesondere Bariumzirconat. Das Treibmittel 3 ist bevorzugt eine Metallverbindung, die sich bis zum Schmelzpunkt des festen Materials nicht zersetzt, jedoch bei ausreichend hoher Strombeaufschlagung der Schmelze elektrolytisch zersetzbar ist. Besonders bevorzugt handelt es sich hierbei um ein Metalloxid. Das feste Material 2 wird im Schmelzetiegel 9 aufgeschmolzen und dadurch zu aufgeschmolzenem Material 4, welches das Treibmittel 3 enthält. Über ein Verbindungsrohr gelangt das aufgeschmolzene Material 4 samt Treibmittel 3 aufgrund der kommunizierenden Anordnung der Gefäße in das Schäumkompartiment 11. Im Schäumkompartiment 11 erfolgt eine Beaufschlagung des aufgeschmolzenen Materials 4 mit Strom, in der Regel Gleichstrom. Durch einen ausreichend hohen Energieeintrag wird im aufgeschmolzenen Material 4 Strom geleitet. Dies kann letztlich auf jede Schmelze angewendet werden, da letztlich jede Schmelze zum Leiter wird, wenn ein genügend hoher Stromeintrag gegeben ist. Durch den Stromeintrag wird das Treibmittel 3 einer Elektrolyse unterworfen. Handelt es sich bei dem Treibmittel 3 beispielsweise um ein Metalloxid, werden die Sauerstoffionen oxidiert, sodass gasförmiger Sauerstoff entsteht, welcher aus der Schmelze entweicht, da Sauerstoff relativ klein ist und leicht diffundieren kann. Die Metallionen hingegen werden reduziert, sodass Metalldampf entsteht, der jedoch nicht entweicht, sondern zu einem Aufschäumen der Schmelze führt. Der Metalldampf entsteht dabei am Minuspol, während der Sauerstoff am Pluspol entsteht. Sind die Elektroden 12 ausreichend weit voneinander beabstandet, entsteht auf einer Seite Metalldampf und auf der anderen Seite Sauerstoff. Selbst wenn der Sauerstoff Poren bildet, kann entsprechender Schaum ohne Weiteres bereichsweise an der Schmelzeoberfläche abgetrennt und gegebenenfalls gesondert für günstigere Anwendungen verwendet werden. Vor allem aber ist dadurch die Gefahr beseitigt, dass der Sauerstoff das entstandene Metall wieder aufoxidiert.

Da aufgeschäumtes Material 5 leichter ist als die Schmelze, steigt aufgeschäumtes Material 5 im Schäumkompartiment 11 auch dann auf, wenn das Verfahren unter Umgebungsbedingungen, also atmosphärischem Druck von 1 bar und Luft als Umgebungsmedium betrieben wird. Wird das Verfahren kontinuierlich geführt, kann das aufgeschäumte Material 5 mit dem Schieber 14 kopfseitig am Schäumkompartiment 11 abgenommen und auf das Förderband 15 geschoben werden. Dabei kann das aufgeschäumte Material 5 noch in einem verformbaren Zustand vorliegen, muss also nicht vollständig verfestigt sein.

Um Poren in Bezug auf eine Größenverteilung gezielt einzustellen, kann etwa im Bereich der Elektroden 12 zusätzlich eine exakte Temperaturführung erreicht werden, wenn über den Wellengenerator 13 ein zusätzlicher Energieeintrag erfolgt. Eine exakte Temperaturführung erlaubt eine genaue Einstellung der Schmelze Temperatur und damit auch der Viskosität, die insofern wichtig ist, als sich der Metalldampf zunächst gegen die Viskosität der Schmelze ausdehnen muss, die Viskosität der Schmelze im Anschluss während der Verfestigung aber hoch genug sein muss, damit bei der Kondensation des Metalldampfes Poren 6 nicht zusammenfallen.

In Fig. 2 ist ein schematischer Ausschnitt aus einem festen Schaum 1 dargestellt. Der Schaum 1 weist eine Vielzahl von Poren 6 auf, wobei Porenwände 7 kugelig, insbesondere aber auch polyedrisch ausgebildet sein können. Die Porenwände 7 sind relativ dünn und weisen beispielsweise im Querschnitt eine Dicke von weniger als 1 µm auf. Aufgrund der Kondensation des Metalldampfes sind die Poren 6 innenseitig mit dem kondensierten Metall vorzugsweise vollständig, zumindest aber bereichsweise belegt. Diese innenseitige Verspiegelung mit einer metallischen Beschichtung 8 der Poren 6 eröffnet ein zusätzliches Anwendungsspektrum für den festen Schaum 1.

Nach der vorstehenden allgemeinen Erläuterung ist nachstehend auf konkrete Ausführungen Bezug genommen.

Ausführungsbeispiele sind Basalt, Cordierit, Borosilicatglas, Quarzglas und Lithium-Aluminium-Silicatgläser, sowie die hochschmelzenden Oxide Aluminiumoxid, Chromoxid, Zirconiumoxid, Strontiumoxid, Hafniumoxid und Thoriumoxid, mit beispielsweise Boroxid, Vanadiumoxid, Yttriumoxid, Lanthanoxid usw. und gegebenenfalls den hochschmelzenden Metallen Molybdän und Wolfram als Treibmittel.

Dabei zeigt sich, dass die Reduktion wahlweise sowohl durch elektrolytische Maßnahmen als auch durch herkömmliche glaschemische Maßnahmen, besonders Einstellung des Redoxpotenzials, im reduzierenden oder stark reduzierenden Bereich möglich ist. Letzteres gelingt durch Beimengung von Reduktionsmitteln, wie Kohle, Metallpulver, bevorzugt Ferrosilicium und besonders bevorzugt Silicium, sowie Zirconium oder Chrom.

Die Beimengung von glasmatrixähnlichen Metallen, wie beispielsweise Ferrosilicium oder Silicium, hat den Vorteil, dass im endgültigen Gemenge keine unerwünschten Rückstände verbleiben. Beispielsweise Silicium reduziert die enthaltenen Treibmittel, beispielsweise Wolfram- oder Molybdänoxid, sodass Metallporendampf oder Metallpartikel entstehen. Bei geeigneter Temperaturführung verdampft dann dieses Metall, besonders im Feld einer leistungsfähigen Mikrowelle. Die entsprechenden Materialien werden in den Schmelzetiegel 9 eingebracht.

Die Auswahl des geeigneten Metalls ist in zweifacher Weise vorgegeben: Der Siedepunkt des Metalls muss ausreichend niedrig sein, um noch als Treibmittel zu wirken, wenn das Matrixmaterial bereits stark erkaltet ist, und andererseits muss ein hoher Dampfdruck entstehen, solange die Schmelze noch dünnflüssig ist.

So wird beispielsweise bei einem Basalt der Provenienz Klöch 5 g/100 g Gemenge Zinkoxid beigegeben, wodurch es gelingt, einerseits elektrochemisch durch Gleichstromelektrolyse Zinkdampfporen zu erzeugen, andererseits durch Zugabe von 5 Gew.-% Zinkoxid und 3 Gew.-% Ferrosilicium auch ohne Gleichstromanteil zinkdampfgefüllte Poren durch Reduktion des Zinkoxides herzustellen.

Da beim Basalt die Viskositätskurve stark von der jeweiligen Provenienz und natürlichen Zusammensetzung des Basaltes abhängig ist, hat sich die Anhebung der Viskosität durch Beigabe von 10 Gew.-% Quarzsand oder 5 Gew.-% Aluminiumoxid sehr bewährt.

Die unterschiedlichen Matrixmaterialien dienen in erster Linie der Anpassung des Erweichungs- und Schmelzpunktes des Schaumes an die Anforderungen des Kunden.

Besonders im Bereich von hochtemperaturfesten Ofendämmungen bewähren sich höher quarzhältige oder mullithältige oder chromoxid- und zirkonreiche Matrixmaterialien.

In einer vorteilhaften Ausführung wird die Temperaturfeinsteuerung in der unmittelbaren Schmelzzone durch den Einsatz einer Mikrowelle gesteuert. Die Mikrowelle weist den Vorteil auf, dass die Heizenergie punktuell eingetragen werden kann (Bildung von Hotspots) und gut moduliert werden kann.

Die geeigneten Frequenzen stimmen mit den ISM-Bändern überein, bei kleineren Anlagen kann eine Frequenz um 2.450 MHz verwendet werden, größere Generatoren (bis 100 kW) sind im Bereich von 915 MHz verfügbar, was auch den Vorteil einer größeren Eindringtiefe hat. Es ist auch möglich, das Glas in der Schaumbildungszone durch hochfrequente Felder, bevorzugt über 500 kHz, besonders bevorzugt bei 13,57 MHz (ISM-Frequenz), wo noch kostengünstige Generatoren mit großer Leistung verfügbar sind, um einige wenige Grade zusätzlich zu erwärmen, sodass die jeweils optimale Schaumbildungstemperatur in einem rasch regelbaren Prozess eingestellt wird.

Die Versuche werden zum Teil auch, in einer alternativen Variante zu jener in Fig. 1, in Laboreinrichtungen mit 3 kW Mikrowellenleistung in einem einzigen Tiegel durchgeführt, woraus sich Mengen im bis zum 100-Gramm-Bereich ergeben, teilweise aber auch mit 45 kW Schmelzleistung. Mit einer solchen Leistung können kontinuierlich im Falle des Basaltglases 50 kg bis 80 kg pro Stunde erwärmt werden, was einer Schaumproduktion von bis zu 2 m³ entspricht. Der Vorteil derartiger, relativ kleiner Aggregate ist, dass sie im Durchflussprinzip betreibbar sind, das heißt, je nach Bedarf in kleinerer oder größerer Anzahl rasch an- und abgefahren werden können, während der herkömmliche Glasschmelzprozess ein Antempern über zum Teil 14 Tage erfordert und daher nur kontinuierlich zu betreiben ist. Allerdings entspricht es dem Stand der Technik, beispielsweise Basalt durch einen elektrischen Lichtbogen zu schmelzen, was durchaus auch eine Modulation der Durchsatzleistung im Tonnen-pro-Stundenbereich ermöglicht (und auch ein Abstellen über das Wochenende, z. B. Mini-Melter-Technologie).

Für das Matrixmaterial kommen bevorzugt Gläser mit einem geringen Temperaturkoeffizient in Betracht, weil beobachtet werden kann, dass Schäume aus beispielsweise Kalknatronglas zwar erhältlich sind, dann aber aufgrund der in den Lamellen des Schaumes eingefrorenen Glasspannungen im Laufe der Zeit zerplatzen. Es wäre nun von großer Problematik, wenn in erheblichen Mengen solche Schäume als Baustoffe verwendet und an Gebäuden appliziert sind und sich dann nach ein bis zwei Jahren zeigt, dass die eingefrorenen Glasspannungen bei thermischer Belastung (Besonnung) dazu führen, dass die Lamellen platzen und das Material von der Wand fällt. Daher werden bevorzugt Materialien mit geringem Temperaturkoeffizient verwendet, zumal es nicht praktikabel erscheint, wie sonst in der Glasfabrikation üblich, eine Entspannung der Glasschäume durch langsames Auskühlen vorzunehmen. Geht man nämlich davon aus, dass ein derartiges Schmelzaggregat unter Produktionsbedingungen ein Vielfaches von 100 m³ pro Stunde an Schaum generiert (was nötig ist, um als Baustoff ernstzunehmende, marktgerechte Quantitäten zu erzeugen), so müsste man riesige Hallen bauen, um das Material beispielsweise 5 oder 10 Stunden lang langsam von 800°°C auf 200 °C abzukühlen, also eine entsprechend beheizbare Halle im Sinn eines Kühlofens.

Geschlossene Poren 6, wie diese im Rahmen der Erfindung erhalten werden, sind in der Lage, auf Bestandsdauer eines Bauwerkes das Vakuum aufrechtzuerhalten. Die konkurrierenden offenen Poren von z. B. Silicagel haben sich als hydrophil erwiesen, was dazu führt, dass selbst bei Porendurchmessern von 50 nm mit der Zeit ein Wasserdampffilm auf den Oberflächen der Lamellen entsteht, welcher eine Dämmleistung herabsetzt.

Außerdem ist es erforderlich, Gläser oder Oxide, jedenfalls anorganische Materialien zu verwenden, weil sich die organischen, niederschmelzenden Materialien, wie beispielsweise Kunststoffe (PUR oder EPS) als längerfristig nicht gasdicht erwiesen haben, und daher, selbst wenn es gelänge, in diesen Poren mit gutem Vakuum zu erzeugen, selbige schon nach wenigen Jahren des Bestandes wieder zumindest so weit teilweise luftgefüllt wären, dass die Unterschreitung der freien Weglänge nicht mehr aufrechterhalten werden kann, wodurch die besondere Dämmleistung kollabiert.

## Patentansprüche

1. Verfahren zur Herstellung eines Schaumes (1), insbesondere eines oxidischen Schaumes (1), aus einem festen Material (2), **dadurch gekennzeichnet, dass** das feste Material (2) aufgeschmolzen und aus einem zugesetzten Treibmittel (3) durch eine Redoxreaktion Gase freigesetzt werden, um im aufgeschmolzenen Material (4) Poren (6) zu bilden, wonach das aufgeschmolzene und geschäumte Material (5) unter Verfestigung abgekühlt wird.

2. Verfahren nach Anspruch 1, **dadurch gekennzeichnet, dass** aus dem Treibmittel (3) mit Stromeintrag, insbesondere intermittierendem Stromeintrag, in die Schmelze des aufgeschmolzenen Materials (4) Gase freigesetzt werden.

3. Verfahren nach Anspruch 2, **dadurch gekennzeichnet, dass** eine Elektrolyse des Treibmittels (3) mit Gleichstrom und/oder gepulstem Wechselstrom und/oder Wechselstrom mit Gleichstromanteil durchgeführt wird.

4. Verfahren nach einem der Ansprüche 1 bis 3, **dadurch gekennzeichnet, dass** eine anorganische Verbindung als Treibmittel (3) zugesetzt wird.

5. Verfahren nach Anspruch 4, **dadurch gekennzeichnet, dass** ein Metalloxid als Treibmittel (3) zugesetzt wird.

6. Verfahren nach einem der Ansprüche 1 bis 5, **dadurch gekennzeichnet, dass** das die Erstellung der Poren (6) bei Luftdruck erfolgt.

7. Verfahren nach einem der Ansprüche 1 bis 6, **dadurch gekennzeichnet, dass** Poren (6) mit einem durchschnittlichen Durchmesser von maximal 20 µm, vorzugsweise maximal 10 µm, insbesondere maximal 1 µm, erstellt werden.

8. Verfahren nach einem der Ansprüche 1 bis 7, **dadurch gekennzeichnet, dass** das Verfahren kontinuierlich geführt wird.

9. Fester Schaum (1) aus einem oxidischen Material, wobei Porenwände (7) zumindest bereichsweise mit einer Schicht eines weiteren Materials belegt sind, **dadurch gekennzeichnet, dass** der Schaum (1) zumindest überwiegend geschlossenzellige Poren (6) aufweist und ein Anteil an fester Masse im Schaum (1) weniger als 5 Vol.-% beträgt.

10. Schaum (1) nach Anspruch 9, **dadurch gekennzeichnet, dass** das weitere Material ein Metall ist.

11. Schaum (1) nach Anspruch 9 oder 10, **dadurch gekennzeichnet, dass** das weitere Material mit einer Schichtdicke von weniger als 1 µm, bevorzugt weniger als 500 nm, insbesondere weniger als 250 nm, an den Porenwänden vorliegt.

12. Schaum (1) nach einem der Ansprüche 9 bis 11, **dadurch gekennzeichnet, dass** die Poren (6) unter Unterdruck stehen.

13. Schaum (1) nach einem der Ansprüche 9 bis 12, **dadurch gekennzeichnet, dass** Poren (6) mit einem durchschnittlichen Durchmesser von maximal 20 µm, vorzugsweise maximal 10 µm, insbesondere maximal 1 µm, vorliegen.

14. Schaum (1) nach einem der Ansprüche 9 bis 13, **dadurch gekennzeichnet, dass** die Porenwände (7) im Querschnitt durchschnittlich dünner als 500 nm, bevorzugt dünner als 250 nm, insbesondere dünner als 150 nm, ausgebildet sind.

15. Schaum (1) nach einem der Ansprüche 9 bis 14, **dadurch gekennzeichnet, dass** ein Anteil an fester Masse im Schaum (1) weniger als 1 Vol.-%, beträgt.
